# EUROPÄISCHE PATENTSCHRIFT

(11) **EP 1 374 626 B1**
(45) Veröffentlichungstag und Bekanntmachung des Hinweises auf die Patenterteilung: **07.05.2008**
(21) Anmeldenummer: 02735014.9
(22) Anmeldetag: 21.03.2002
(51) Int. Cl.: H04Q 7/38

(54) **VERFAHREN ZUR ZUORDNUNG EINES MOBILEN KOMMUNIKATIONSENDGERÄTES ZU EINEM CORENETZWERKKNOTEN**
METHOD FOR ASSIGNING A MOBILE COMMUNICATIONS TERMINAL TO A CORE NETWORK NODE
PROCEDE D'ATTRIBUTION D'UN TERMINAL DE COMMUNICATION MOBILE A UN NOEUD DE RESEAU CENTRAL

(30) Priorität: 30.03.2001 DE 10117269
(43) Veröffentlichungstag der Anmeldung: 02.01.2004
(73) Patentinhaber: Nokia Siemens Networks GmbH & Co. KG, 81541 München (DE)
(72) Erfinder: MADEMANN, Frank, 13189 Berlin (DE)
(86) Internationale Anmeldenummer: PCT/DE2002/001077
(87) Internationale Veröffentlichungsnummer: WO 2002/080603

(56) Entgegenhaltungen:
- WO-A-00/21319
- WO-A-01/15471
- "3rd Generation Partnership Project (3GPP); Technical Specification Group (TSG) CN; UMTS; TR 23.913 V 1.0.0; Turbo-Charger Technical Report" 3GPP, 13. Dezember 1999 (1999-12-13), Seiten 6-18, XP002161729
- "Digital cellular telecommunications system (Phase 2+) (GSM); Universal Mobile Telecommunications System (UMTS); Intra-domain connection of Radio Access Network (RAN) nodes to multiple Core Network (CN) nodes (3GPP TS 23.228 version 5.2.0 Release 5) ETSI TS 123 236 V5.2.0 (2002-03)" ETSI, März 2002 (2002-03), Seiten 1-36, XP002210729 Sophia Antipolis, FRANCE

## Beschreibung

Die vorliegende Erfindung betrifft ein Verfahren zur Zuordnung eines mobilen Kommunikationsendgerätes mit einer temporären Teilnehmeridentität und einem zugeordneten Routingparameter bei einem Wechsel von einem ersten Corenetzgebiet zu einem zweiten Corenetzgebiet zu einem Corenetzwerkknoten eines Corenetzwerkbetreibers im zweiten Corenetzgebiet. Im bisherigen GSM und UMTS System existiert eine starre Zuordnung von genau einem Corenetzwerkknoten zu einem identifizierbaren Radiogebiet, d.h. zu einer Location oder Routing Area. Auch in der 3GPP wird ein Verfahren spezifiziert, wobei jedem Endgerät bei Neuanmeldung in einem Corenetzgebiet, das von verschiedenen Corenetzwerkknoten bedient wird, ein spezieller Routingparameter zugeordnet wird. Das mobile Kommunikationsendgerät muss dabei einen Corenetzgebietswechsel feststellen und dem Netzwerk anzeigen. Dieser Routingparameter wird meist parallel auch in der temporären Teilnehmeridentität (P-)TMSI codiert und identifiziert genau einen Corenetzwerkknoten innerhalb eines Corenetzgebietes. Ein solches Corenetzgebiet besteht aus mehreren identifizierbaren Radiogebieten. Wenn das Endgerät zwar die identifizierbaren Radiogebiete wechselt, aber innerhalb eines solchen Corenetzgebietes bleibt, wird der Corenetzwerkknoten nicht gewechselt. Durch diese Verteilung von Endgeräten auf entsprechende Corenetzwerkknoten wird das von einem einzelnen Corenetzwerkknoten bediente Gesamtradiogebiet vergrößert. Somit verringert sich die Signalisierungslast, insbesondere die mit dem Heimatregister. Die Verfügbarkeit erhöht sich durch mehrere Knoten, die parallel betrieben werden. Dadurch wird die Zuverlässigkeit besser. Auch die Skalierbarkeit des Gesamtsystems verbessert sich. Zudem wird die Anzahl an Handovers zwischen den Corenetzwerkknoten reduziert. Damit innerhalb eines Corenetzgebietes immer derselbe Corenetzwerkknoten das Endgerät bedient, errichtet das Radiosystem die Signalisierungsverbindung für ein Endgerät mit dem jeweiligen Corenetzwerkknoten entsprechend dem zugewiesenen Routingparameter. Wenn ein Corenetzgebiet gewechselt wird, teilt das Endgerät dies dem Radiosystem mit, dass es neu in diesem Corenetzgebiet ist. Das erkennt das Endgerät aus den Identitäten der identifizierbaren Radiogebiete, die hierfür eine spezielle Struktur erhalten. Bei einem solchen Corenetzgebietswechsel wählt das Radiosystem einen neuen Corenetzwerkknoten aus, welcher das Endgerät fortan bedienen soll, beispielsweise mittels Lastverteilung zwischen den möglichen Corenetzwerkknoten. Von dem neuen Corenetzwerkknoten erhält das mobile Kommunikationsgerät üblicherweise einen neuen Routingparameter und eine neue temporäre Teilnehmeridentität. Diese werden von dem mobilen Kommunikationsgerät gespeichert und bei nachfolgender Signalisierung wieder an das Netz gesendet.

Das Dokument 3GPP TR 23.913, "Turbo-Charger Technical Report", Version 1.0.0, beschreibt ein Verfahren zum Zuordnen eines Corenetzwerkknotens zu einem Kommunikationsendgerät mittels der Codierung einer Identifikationsinformation des Corenetzwerkknotens in eine TMSI (Temporary Mobile Subscriber Identity) und Zuweisung dieser TMSI zu dem Kommunikationsendgerät. Diese Zuordnung bzw. Zuweisung wird durch eine zwischen den RNCs und den Corenetzwerkknoten angeordnete "Turbo-Charger Routing Function" übernommen. Die Vergabe der TMSI erfolgt dabei entweder zufallsgesteuert oder auf Basis der aktuellen Netzlast.

Eine Aufgabe der vorliegenden Erfindung war es, ein demgegenüber weiterentwickeltes Verfahren bereitzustellen, mit dessen Hilfe es möglich ist, Corenetzwerkknoten verschiedener Corenetzbetreiber an einem Radiosystem zu unterstützen bzw. zu unterscheiden.

Gelöst wird diese Aufgabe durch das erfindungsgemäße Verfahren gemäß Anspruch 1. Weitere bevorzugte Ausführungsformen des erfindungsgemäßen Verfahrens sind in den entsprechenden Unteransprüchen angegeben.

Gemäß Anspruch 1 wird erfindungsgemäß ein Verfahren zur Zuordnung eines mobilen Kommunikationsendgerätes mit einer temporären Teilnehmeridentität und/oder einem zugeordneten Routingparameter zu einem Corenetzwerkknoten eines Corenetzwerkbetreibers bei einem Wechsel von einem ersten Corenetzgebiet zu einem zweiten Corenetzgebiet bereitgestellt, wobei das Verfahren die folgenden Schritte aufweist:
a. Codieren von höchstens jeweils einem Corenetzwerkknoten des jeweiligen Corenetzgebiet in dem Routingparameter und/oder der temporären Teilnehmeridentität des mobilen Kommunikationsendgerätes,
b. Zuordnen des mobilen Kommunikationsendgerätes zu einem Corenetzwerkknoten des zweiten Corenetzgebietes entsprechend der folgenden Priorisierung:
   - zu dem höchstens einen Corenetzwerkknoten des zweiten Corenetzgebietes, der in dem Routingparameter und/oder der temporären Teilnehmeridentität codiert ist oder
   - zu einem alternativen Corenetzwerkknoten, wenn im zweiten Corenetzgebiet kein in dem Routingparameter und/oder der temporären Teilnehmeridentität codierter Corenetzwerkknoten vorhanden ist.

Entspricht ein Corenetzwerkknoten innerhalb des zweiten Corenetzgebietes dem Routingparameter, d.h. ist er in dem Routingparameter codiert, so findet die Zuordnung des mobilen Kommunikationsendgerätes erfindungsgemäß in erster Priorität an diesen statt, unabhängig davon, ob der Routingparameter im aktuellen oder in einem anderen Corenetzgebiet dem mobilen Kommunikationsendgerät zugewiesen wurde. Der Routingparameter kann dabei auch innerhalb der temporären Teilnehmeridentität hinterlegt sein.

In einer bevorzugten Ausführungsform des erfindungsgemäßen Verfahrens wird das mobile Kommunikationsendgerät bei einem Wechsel von einem ersten Corenetzgebiet zu einem zweiten Corenetzgebiet jeweils einem Corenetzwerkknoten desselben Corenetzwerkbetreibers zugeordnet. Vorzugsweise ist in der Codierung der Routingparameter für jeden Corenetzwerkknoten auch der jeweilige Corenetzwerkbetreibers enthalten. Somit ist durch die Codierung eine Identifikationsmöglichkeit des Corenetzwerkbetreibers und gleichzeitig der entsprechenden Corenetzwerkknoten des Corenetzwerkbetreibers gegeben. Durch das erfindungsgemäße Verfahren wird somit in erster Priorität erreicht, dass bei einem Wechsel des Corenetzgebietes ein mobiles Kommunikationsendgerät wieder einem Corenetzwerkknoten desselben Corenetzwerkbetreibers zugeordnet wird. In jedem Corenetzwerkgebiet existiert dabei höchstens ein Corenetzwerkknoten eines Corenetzwerkbetreibers, der genau der Codierung in dem Routingparameter und /oder in der temporären Teilnehmeridentität entspricht. Aufgrund der Codierung in dem Routingparameter und/oder der temporären Teilnehmeridentität wird erkannt, welcher Corenetzwerkbetreiber bzw. welches Corenetzwerk bislang das mobile Kommunikationsendgerät bedient hat. Demnach wird auch nach einem Wechsel des Corenetzgebietes die Signalisierung des mobilen Kommunikationsendgerätes zu einem Corenetzwerkknoten desselben Corenetzwerkbetreibers bzw. desselben Corenetzwerks übertragen, soweit dies möglich ist. Ist für eine bestimmte Codierung, d.h. für einen konkreten Routingparameter des ersten Corenetzgebietes im neuen, d.h. im zweiten Corenetzgebiet kein Corenetzwerkknoten eingerichtet, erfolgt eine Zuordnung des mobilen Kommunikationsendgerätes zu einem anderen bzw. zu einem alternativen Corenetzwerkknoten. Vorzugsweise erfolgt hier die Zuordnung auch zu einem Corenetzwerkknoten desselben Corenetzwerkbetreibers.

Dazu werden mitgesendete Parameter wie temporäre Teilnehmeridentität und/oder Routingparameter ausgewertet, um so aus der bekannten Struktur einen alternativen Corenetzwerkknoten desselben Corenetzwerkbetreibers innerhalb des neuen Corenetzgebietes abzuleiten.

Bei der Zuordnung zu einem alternativen Corenetzwerkknoten im Falle, dass kein dem Routingparameter entsprechender Corenetzwerkknoten in dem neuen Corenetzgebiet vorhanden ist, ergibt sich die Möglichkeit einer steuerbaren Verteilung von roamenden Teilnehmern, die beispielsweise aus fremden Netzen kommen, zwischen den Corenetzwerkbetreibern, welche ein gemeinsames Radiosystem nutzen. Die Verteilung zwischen den Corenetzwerkbetreibern kann beispielsweise anhand von Listen erfolgen, welche beispielsweise bevorzugte oder andererseits nicht erwünschte andere Corenetzwerkbetreiber enthalten und in den einzelnen Corenetzwerkknoten hinterlegt sind. Dementsprechend werden mobile Kommunikationsendgeräte, die neu in ein Corenetzgebiet kommen, von einem Corentzwerkknoten akzeptiert oder abgewiesen. Bei Abweisung wird die Signalisierung dieses mobilen Kommunikationsendgerätes an einen Corenetzwerkknoten eines anderen Corenetzwerkbetreibers gesendet. Falls der Corenetzwerkbetreiber selbst mehrere Netze national und/oder international betreibt, können die genannten Listen auch die Vielzahl der entsprechenden Netzkennungen der einzelnen von diesem Corenetzwerkbetreiber betriebenen Netze umfassen. Hierdurch wird auch bei internationalem Roaming ein mobiles Kommunikationsendgerät immer einem Corenetzwerkknoten eines Corenetzwerks desselben Corenetzwerkbetreibers zugeordnet.

In einer bevorzugten Ausführungsform des erfindungsgemäßen Verfahrens wird bei Zuordnung zu einem alternativen Corenetzwerkknoten in Schritt b. des oben genannten erfindungsgemäßen Verfahrens, dem mobilen Kommunikationsendgerät ein neuer Routingparameter und/oder eine neue temporäre Teilnehmeridentität zugewiesen, wenn kein Corenetzwerkknoten des neuen Corenetzgebiet dem ursprünglichen Routingparameter und/oder der temporären Teilnehmeridentität entspricht. Die Wahl eines alternativen Corenetzwerkknotens erfolgt vorzugsweise entsprechend einer geeigneten Lastverteilung.

Ferner wird die Zuordnung in Schritt b. des erfindungsgemäßen Verfahrens vorzugsweise in einer Funktionseinheit eines Radiosystems, welches verschiedene Corenetzwerke bedient, vorgenommen. Vorzugsweise erfolgt dies im BSC (Base Station Controller) bei GSM Radio (GERAN) und im RNC (Radio Network Controller) beim UTRAN. Dabei hat die entsprechende Funktionseinheit des Radiosystems eine Tabelle, die jedem Routingparameter eine Signalisierungsadresse zuweist. Die auszuwertende Information bezüglich der Zuordnung zu einer Signalisierungsadresse war bislang für das Radiosystem transparent.

Vorzugsweise ist das erfindungsgemäße Verfahren sowohl bei mobilen Kommunikationsendgeräten der 3GPP ab Re15 anwendbar wie auch bei Endgeräten, die Vorgängerradiosystemen wie UTRAN vor Re15 oder dem GSM Radiosystem entsprechen. In letzterem Fall wird kein expliziter Routingparameter eingeführt, sondern der Corenetzwerkknoten wird innerhalb der temporären Teilnehmeridentität codiert. Damit ist die temporäre Teilnehmeridentität nicht mehr transparent für das Radiosystem. Diese muss vom Radiosystem aus den Signalisierungsnachrichten herausgefiltert werden, um daraus die Identität des Corenetzwerkknotens zu ermitteln und die Signalisierung an eine entsprechende Signalisierungsadresse weiterzuleiten.

Vorzugsweise wird die Codierung des Corenetzwerkknotens und/oder des Corenetzwerkbetreibers in der temporären Teilnehmeridentität auch verwendet, wenn bei alternativen Radiosystemen, wie beispielsweise GSMRAN/GERAN, ein Routingparameter nicht verwendet wird. Damit kann man jedoch auch bei einem Wechsel zwischen alternativen Radiosystemen (GSMRAN/GERAN und UTRAN) den Corenetzwerkbetreiber bzw. auch den Corenetzwerkknoten beibehalten. Dadurch verringert sich die Signalisierungslast, speziell die mit dem Heimatregister. Ferner wird die Anzahl der Handover zwischen Corenetzwerkknoten reduziert.

In einer bevorzugten Ausführungsform des erfindungsgemäßen Verfahrens wird bei einem Wechsel von einem ersten Corenetzgebiet zu einem zweiten unmittelbar benachbarten Corenetzgebiet das mobile Kommunikationsendgerät einem alternativen Corenetzwerkknoten zugeordnet, da die Codierung in Schritt a. des erfindungsgemäßen Verfahrens derart vorgenommen wird, dass im zweiten unmittelbar benachbarten Corenetzgebiet kein in dem Routingparameter und/oder der temporären Teilnehmeridentität codierter Corenetzknoten vorhanden ist. Durch diese zweckmäßige Konfigurierung der Routingparameterwerte, die innerhalb eine Corenetzgebietes verwendet werden, kann bei nahezu jedem Corenetzgebietswechsel eine Neuverteilung durch das Radiosystem erreicht werden, ohne dass das mobile Kommunikationsendgerät oder das Radiosystem einen Wechsel des Corenetzgebietes erkennen müssen. Hierzu werden in jeweils zwei benachbarten Corenetzgebieten nie die gleichen Werte für den Routingparameter konfiguriert. Das bedeutet, dass in jeweils zwei benachbarten Corenetzgebieten zusammen ein konkreter Routingparameterwert, d.h. ein konkret codierter Routingparameter nur einem Corenetzwerkknoten zugeordnet werden kann.

Damit wird bei den häufigsten Wechseln, nämlich den zwischen benachbarten Corenetzgebieten, eine Verteilung der mobilen Kommunikationsendgeräte zwischen den zuständigen Corenetzwerkknoten ein und desselben Corenetzwerkbetreibers, beispielsweise entsprechend einer gleichmäßigen Lastenverteilung ermöglicht.

Gegenüber dem 3GPP Ansatz wird eine Reduzierung der möglichen Location und/oder Routing Areas verhindert und dadurch auch eine Reduzierung der möglichen Zahl von temporären Teilnehmeridentitäten, weil Location wie auch Routing Areas Identitäten nicht strukturiert werden müssen.

Ein Vorteil der vorliegenden Erfindung ist vor allem darin zu sehen, dass es mittels des erfindungsgemäßen Verfahrens möglich wird, einen Corenetzwerkbetreiber in einer temporären Teilnehmeridentität und/oder einem Routingparameter zu codieren und Signalisierungsnachrichten von mobilen Kommunikationsendgeräten durch ein Radiosystem an Corenetzwerkknoten entsprechend dieser Codierung zu verteilen bzw. zu routen. Ferner wird durch eine Konfiguration von sich gegenseitig ausschließenden Werten für Routingparameter, der auch in der temporären Teilnehmeridentität codiert sein kann, in jeweils zwei benachbarten Corenetzgebieten erreicht, dass das Radiosystem bei einem Wechsel des Corenetzgebietes das mobile Kommunikationsendgerät einem beliebigen neuen Corenetzwerkknoten desselben Corenetzwerkbetreibers zuordnen kann, da für den alten Wert des Routingparameters im neuen Corenetzgebiet kein Corenetzwerkknoten konfiguriert ist, aber gleichzeitig aus dem alten Wert bzw. der alten Codierung des Routingparameters der Corenetzwerkbetreiber ableitbar ist. Somit kann die Auswahl vollständig mittels Lastverteilung zwischen den Corenetzwerkknoten des Corenetzbetreibers erfolgen, da der ursprüngliche Routingsparameter nicht berücksichtigt werden kann.

Weitere Vorteile des erfindungsgemäßen Verfahrens werden anhand der folgenden Figuren näher erläutert. Es zeigen
Fig. 1 Schematische Darstellung der Zuordnung eines mobilen Kommunikationsendgerätes zu einem Corenetzwerkknoten, wenn die temporäre Teilnehmeridentität und/oder der zugeordnete Routingparameter keinem Corenetzwerkknoten in einem Corenetzgebiet zugeordnet werden können;
Fig. 2 Schematische Darstellung der Zuordnung eines mobilen Kommunikationsendgerätes zu einem Corenetzwerkknoten, wenn eine Codierung in der temporären Teilnehmeridentität und/oder im Routingparameter vorliegt, die in dem Corenetzgebiet bekannt ist.

Ein mobiles Kommunikationsendgerät bzw. eine entsprechende Mobilstation 1 (MS) errichtet bei Eintritt in ein Corenetzgebiet einen Radiosignalisierungskanal 2 und sendet eine initiale Signalisierungsnachricht. In einer Funktionseinheit 3 eines Radiosystems wird aus einer dem mobilen Kommunikationsendgerät 1 zugeordneten temporären Teilnehmeridentität und/oder einem entsprechend zugeordneten Routingparameter ermittelt, dass das MS 1 noch keinem Corenetzwerkknoten in diesem Corenetzgebiet zugeordnet ist. Bei der Funktionseinheit 3 des Radiosystems kann es sich dabei um ein UTRAN-RNC (UMTS Terrestrial Radio Access Network - Radio Network Controller) oder ein GERAN-BSC (GSM Enhanced Radio Access Network - Base Station Controller) handeln. Die Funktionseinheit 3 erkennt an der in dem Routingparameter und/oder der in der temporären Teilnehmeridentität hinterlegten Codierung, dass in dem Corenetzgebiet kein Corenetzwerkknoten vorhanden ist, der dieser hinterlegten Codierung entspricht. Im 3GPP Ansatz erkennt das mobile Kommunikationsendgerät 1 selbst aus einer Struktur der Radiogebietsidentitäten den Wechsel in ein anderen Corenetzgebiet, was aber erfindungsgemäß von der Funktionseinheit 3 des Radiosystems ignoriert wird. In diesem Fall, in dem kein Corenetzwerkknoten für den ursprünglichen Wert des Routingparameters konfiguriert ist, wählt die Funktionseinheit 3 einen alternativen Corenetzwerkknoten aus. Die Wahl wird dabei vorzugsweise unter Berücksichtigung einer Lastteilung getroffen. In einer bevorzugten Ausführungsform des erfindungsgemäßen Verfahrens werden die in dem Routingparameter und/oder in der temporären Teilnehmeridentität hinterlegten Parameter ausgewertet, wodurch sich aus der Struktur gegebenenfalls ein Corenetzwerkknoten eines möglichen Corenetzbetreibers ableiten lässt. Die Funktionseinheit 3 des Radiosystems sendet sodann die initiale Signalisierungsnachricht zu dem durch die Funktionseinheit 3 des Radiosystems ermittelten Corenetzwerkknotens 4. Der Corenetzwerkknoten 4 ermittelt zunächst die Teilnehmerdaten. Ferner wird in dem Corentzwerkknoten 4 das aus den Teilnehmerdaten bekannte Heimatnetz des mobilen Kommunikationsendgerätes 1 mit hinterlegten Listen von bevorzugten bzw. nicht erwünschten Netzen verglichen. Wenn der Corenetzwerkknoten 4 das mobile Kommunikationsendgerät 1 akzeptiert, wird jegliche nachfolgende Signalisierung zwischen diesem Corenetzwerkknoten 4 und dem mobilen Kommunikationsendgerät 1 ausgetauscht. Ist das mobile Kommunikationsendgerät 1 hingegen nicht erwünscht, ist es z.B. aus einem internationalen Netz, welches auch zu einem anderen Netzwerkbetreiber gehört, mit welchem beispielsweise das Radiosystem geteilt wird, so weist der Corenetzwerkknoten 4 die Signalisierungsnachricht an die Funktionseinheit 3 des Radiosystems mit einem entsprechenden Grund zurück. Der Grund kann anzeigen, dass das internationale Netz, aus dem das mobile Kommunikationsendgerät 1 kommt nicht zu den in bei dem Corenetzwerkknoten 4 hinterlegten Listen aufgeführten bevorzugten Netzen gehört. Die Funktionseinheit 3 des Radiosystems ermittelt unter Zuhilfenahme des genannten Grundes einen alternativen Corenetzwerkknotens eines anderen Corenetzwerkbetreibers, der ebenfalls von dem Radiosystem bedient wird. Ist ein derartiger Corenetzwerkknoten 5 ermittelt, so sendet die Funktionseinheit 3 des Radiosystems die Signalisierungsnachricht an diesen Corenetzwerkknoten 5. Der Corentzwerkknoten 5 ermittelt wiederum die Teilnehmerdaten des mobilen Kommunikationsendgerätes 1 und bestätigt die Zuordnung zu diesem Corenetzwerkknoten 5. Jede nachfolgende Signalisierung wird nun zwischen dem Corenetzwerkknoten 5 und dem mobilen Kommunikationsendgerät 1 ausgetauscht. Das mobile Kommunikationsendgerät 1 erhält eine neue temporäre Teilnehmeridentität und/oder einen neuen Routingparameter, in welchen fortan genau der Corenetzwerkknoten 5 in diesem Corenetzgebiet codiert ist.

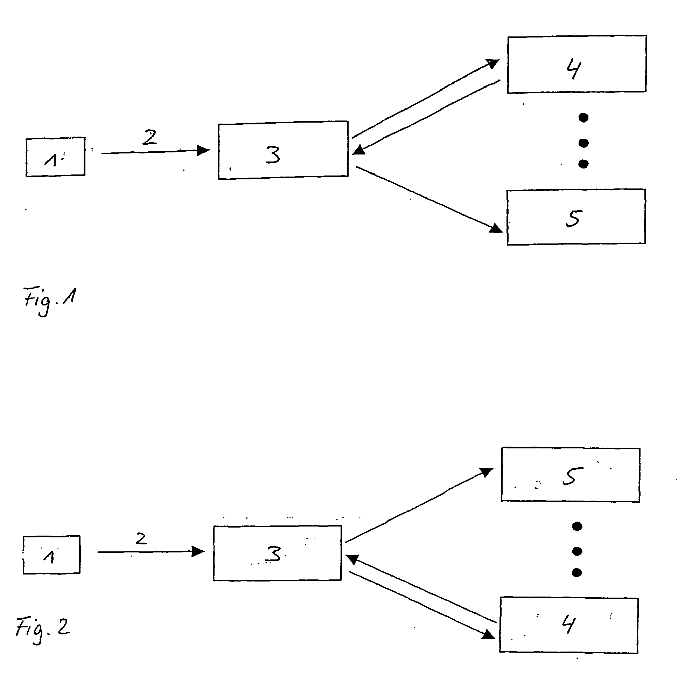

Figur 2 zeigt eine schematische Darstellung der Zuordnung eines mobilen Kommunikationsendgerätes 1 zu einem Corenetzwerkknoten, wenn ein Wert innerhalb der temporären Teilnehmeridentität und/oder im Routingparameter vorliegt, für den in dem Corenetzgebiet ein Corenetzwerkknoten konfiguriert ist. Das mobile Kommunikationsendgerät bzw. die entsprechende Mobilstation 1 (MS) errichtet einen Radiosignalisierungskanal 2 und sendet eine initiale Corenetzwerksignalisierungsnachricht an eine Funktionseinheit 3 in einem entsprechenden Radiosystem. In der Funktionseinheit 3 des Radiosystems wird aus der dem mobilen Kommunikationsendgerät 1 zugeordneten temporären Teilnehmeridentität und/oder aus dem entsprechend zugeordneten Routingparameter ermittelt, dass das mobile Kommunikationsendgerät einem Corenetzwerkknoten aus dem Corenetzgebiet zuordenbar ist. Daraufhin sendet die Funktionseinheit 3 des Radiosystems die initiale Signalisierungsnachricht zu dem durch die Funktionseinheit 3 ermittelten Corenetzwerkknoten 4. Nachdem der Corenetzwerkknoten 4 die in der Nachricht enthaltenen Daten verifiziert hat und festgestellt hat, dass das mobile Kommunikationsendgerät 1 in dem Corenetzwerkknoten 4 registriert ist, bestätigt er die Signalisierung. Sämtliche nachfolgende Signalisierung wird zwischen dem mobilen Kommunikationsendgerät bzw. zwischen der Mobilstation 1 und dem Corenetzwerkknoten 4 ausgetauscht. Stellt der Corenetzwerkknoten 4 jedoch fest, dass das mobile Kommunikationsendgerät 4 nicht registriert ist, ermittelt der Corenetzwerkknoten die Teilnehmerdaten. Dieser Fall kann eintreten, wenn das mobile Kommunikationsendgerät 1 neu in dieses Corenetzgebiet kommt und anhand von alten Parametern an diesen Corenetzwerkknoten verteilt wurde. Die Verwendung der alten Parameter kann, muss aber nicht zu einer gewünschten Zuordnung zu einem Corenetzwerkknoten führen. Eine Funktionseinheit innerhalb des Corenetzwerkknotens 4 vergleicht das aus den Teilnehmerdaten bekannte Heimatnetz des mobilen Kommunikationsendgerätes 1 mit in dem Corenetzwerkknoten 4 hinterlegten Listen von bevorzugten bzw. nicht erwünschten Netzen. Ist das mobile Kommunikationsendgerät 1 beispielsweise aus einem anderen internationalen Netz, welches zu einem anderen Betreiber gehört, mit dem das Radiosystem geteilt wird, so weist der Corenetzwerkknoten 4 diese Signalisierung zurück an die Funktionseinheit 3 des Radiosystems mit entsprechender Begründung. Daraufhin ermittelt die Funktionseinheit 3 eine Corenetzwerkknoten eines anderen Corenetzwerkbetreibers. Die Funktionseinheit 3 des Radiosystems sendet die Signalisierung an einen entsprechenden Corenetzwerkknoten 5, der die Zuordnung bestätigt. Jede nachfolgende Signalisierung wird zwischen dem Corenetzwerkknoten 5 und dem mobilen Kommunikationsendgerät 1 ausgetauscht. Das mobile Kommunikationsendgerät 1 erhält eine neue temporäre Identität und/oder einen neuen Routingparameter, in welchem dann der Corenetzwerkknoten 5 entsprechend codiert ist. Fortan wird dann die Signalisierung des mobilen Kommunikationsendgerät 1 automatisch an den Corenetzwerkknoten 5 geleitet, solange das mobile Kommunikationsendgerät 1 in diesem Corenetzgebiet ist.

## Patentansprüche

1. Verfahren zur Zuordnung eines mobilen Kommunikationsendgerätes (1) mit einer temporären Teilnehmeridentität und/oder einem zugeordneten Routingparameter zu einem Corenetzwerkknoten (4, 5) eines Corenetzwerkbetreibers bei einem Wechsel von einem ersten Corenetzgebiet zu einem zweiten Corenetzgebiet, wobei das Verfahren die folgenden Schritte aufweist:
a. Codieren von höchstens jeweils einem Corenetzwerkknoten des jeweiligen Corenetzgebietes in dem Routingparameter und/oder der temporären Teilnehmeridentität des mobilen Kommunikationsendgerätes,
b. Zuordnen des mobilen Kommunikationsendgerätes zu einem Corenetzwerkknoten des zweiten Corenetzgebietes entsprechend der folgenden Priorisierung:
- zu dem höchstens einen Corenetzwerkknoten des zweiten Corenetzgebietes, der in dem Routingparameter und/oder der temporären Teilnehmeridentität codiert ist oder
- zu einem alternativen Corenetzwerkknoten, wenn im zweiten Corenetzgebiet kein in dem Routingparameter und/oder der temporären Teilnehmeridentität codierter Corenetzwerkknoten vorhanden ist.

2. Verfahren nach Anspruch 1,
**dadurch gekennzeichnet,**
**dass** das mobile Kommunikationsendgerät (1) bei einem Wechsel von einem ersten Corenetzgebiet zu einem zweiten Corenetzgebiet einem Corenetzwerkknoten desselben Corenetzwerkbetreibers zugeordnet wird.

3. Verfahren nach Anspruch 1 oder 2,
**dadurch gekennzeichnet,**
**dass** der Corenetzwerkbetreiber in dem Routingparameter und/oder der temporären Teilnehmeridentität codiert wird.

4. Verfahren nach einem der vorhergehenden Ansprüche,
**dadurch gekennzeichnet,**
**dass** bei Zuordnen des mobilen Kommunikationsendgerät (1) zu einem alternativen Corenetzwerkknoten die Zuordnung anhand von in den jeweiligen Corenetzwerkknoten hinterlegten Listen erfolgt.

5. Verfahren nach einem der vorhergehenden Ansprüche,
**dadurch gekennzeichnet,**
**dass** bei Zuordnung zu einem alternativen Corenetzwerkknoten, dem mobilen Kommunikationsendgerät (1) ein neuer Routingparameter und/oder eine neue temporäre Teilnehmeridentität zugeordnet wird.

6. Verfahren nach einem der vorhergehenden Ansprüche,
**dadurch gekennzeichnet,**
**dass** Schritt b. in einer Funktionseinheit (3) eines Radiosystems, das mehrere Corenetzwerke bedient, vorgenommen wird.

7. Verfahren nach einem der vorhergehenden Ansprüche,
**dadurch gekennzeichnet,**
**dass** bei einem Wechsel von einem ersten Corenetzgebiet zu einem zweiten unmittelbar benachbarten Corenetzgebiet das mobile Kommunikationsendgerät (1) einem alternativen Corenetzwerkknoten zugeordnet wird, da das Codieren in Schritt a. derart vorgenommen wird, dass im zweiten unmittelbar benachbarten Corenetzgebiet kein in dem Routingparameter und/oder der temporären Teilnehmeridentität codierter Corenetzwerkknoten vorhanden ist.

## Claims

1. Method for assigning a mobile communications terminal (1) having a temporary subscriber identity and/or an associated routing parameter to a core network node (4, 5) of a core network provider when changing from a first core network area to a second core network area, the method exhibiting the following steps:
a. coding of a maximum of in each case one core network node of the respective core network area in the routing parameter and/or the temporary subscriber identity of the mobile communications terminal,
b. assigning the mobile communications terminal to a core network node of the second core network area in accordance with the following prioritization:
- to the, at most, one core network node of the second core network area which is coded in the routing parameter and/or the temporary subscriber identity, or
- to an alternative core network node if, in the second core network area, there is no core network node coded in the routing parameter and/or the temporary subscriber identity.

2. Method according to claim 1, **characterized in that** the mobile communications terminal (1) is assigned to a core network node of the same core network provider when changing from a first core network area to a second core network area.

3. Method according to claim 1 or 2, **characterized in that** the core network provider is coded in the routing parameter and/or the temporary subscriber identity.

4. Method according to one of the preceding claims, **characterized in that** when the mobile communications terminal (1) is assigned to an alternative core network node, the assignment takes place by means of lists stored in the respective core network nodes.

5. Method according to one of the preceding claims, **characterized in that** when it is assigned to an alternative core network node, a new routing parameter and/or a new temporary subscriber identity is assigned to the mobile communications terminal (1).

6. Method according to one of the preceding claims, **characterized in that** step b is performed in a functional unit (3) of a radio system which serves a number of core networks.

7. Method according to one of the preceding claims, **characterized in that**, when changing from a first core network area to a second immediately adjacent core network area, the mobile communications terminal (1) is assigned to an alternative core network node since the coding in step a is performed in such a manner that there is no core network node coded in the routing parameter and/or the temporary subscriber identity in the second immediately adjacent core network area.

## Revendications

1. Procédé d'attribution d'un terminal de communication mobile (1), ayant une identité d'abonné temporaire et/ou un paramètre d'acheminement attribué, à un noeud de réseau central (4, 5) d'un opérateur de réseau central lors d'un changement d'une première zone de réseau central vers une deuxième zone de réseau central, le procédé présentant les étapes suivantes :
a. codage d'au maximum respectivement un noeud de réseau central de la zone respective de réseau central dans le paramètre d'acheminement et/ou dans l'identité d'abonné temporaire du terminal de communication mobile,
b. attribution du terminal de communication mobile à un noeud de réseau central de la deuxième zone de réseau central de manière correspondant à la mise en priorité suivants :
- à au maximum respectivement un noeud de réseau central de la deuxième zone de réseau central, qui est codé dans le paramètre d'acheminement et/ou dans l'identité d'abonné temporaire ou
- à un noeud de réseau central alternatif, lorsqu'aucun noeud de réseau central codé dans le paramètre d'acheminement et/ou dans l'identité d'abonné temporaire n'est présent dans la deuxième zone de réseau central.

2. Procédé selon la revendication 1,
**caractérisé en ce**
**que** le terminal de communication mobile (1), lors d'un changement d'une première zone de réseau central vers une deuxième zone de réseau central, est attribué à un noeud de réseau central du même opérateur de réseau central.

3. Procédé selon la revendication 1 ou 2,
**caractérisé en ce**
**que** l'opérateur de réseau central est codé dans le paramètre d'acheminement et/ou dans l'identité d'abonné temporaire.

4. Procédé selon l'une quelconque des revendications précédentes,
**caractérisé en ce**
**que**, lors de l'attribution du terminal de communication mobile (1) à un noeud de réseau central alternatif, l'attribution est réalisée à l'aide de listes enregistrées dans les noeuds de réseau central respectifs.

5. Procédé selon l'une quelconque des revendications précédentes,
**caractérisé en ce**
**que**, lors de l'attribution à un noeud de réseau central alternatif, un nouveau paramètre d'acheminement et/ou une nouvelle identité d'abonné temporaire est affecté au terminal de communication mobile (1).

6. Procédé selon l'une quelconque des revendications précédentes,
**caractérisé en ce**
**que** l'étape b. est exécutée dans une unité fonctionnelle (3) d'un système radio qui dessert plusieurs réseaux centraux.

7. Procédé selon l'une quelconque des revendications précédentes,
**caractérisé en ce**
**que**, lors d'un changement d'une première zone de réseau central vers une deuxième zone de réseau central directement voisine, le terminal de communication mobile (1) est attribué à un noeud de réseau central alternatif, du fait que le codage est exécuté de telle manière à l'étape a. qu'aucun noeud de réseau central codé dans le paramètre d'acheminement et/ou dans l'identité d'abonné temporaire n'est présent dans la deuxième zone de réseau central directement voisine.
